# EUROPEAN PATENT APPLICATION

(11) **EP 1 492 002 A2**
(43) Date of publication of application: **29.12.2004**
(21) Application number: 04102561.0
(22) Date of filing: 07.06.2004
(51) Int. Cl.: G06F 9/445

(54) **Dependency based deployment of packages in a computing environment**

(30) Priority: 20.06.2003 US 600178
(71) Applicant: MICROSOFT CORPORATION, Redmond, WA 98052 (US)
(72) Inventor: Haselden, J. Kirk, 98029, Issaquah (US); Sharma, Ashvini, 98006, Bellevue, (US)
(74) Representative: Grünecker, Kinkeldey, Stockmair & Schwanhäusser Anwaltssozietät

(57) **Abstract**

The deployment of packages and their dependents is provided. In an illustrative implementation, an interface operates to expose the components of a package and to determine the dependencies of the components. In operation, a scan is performed on the package components to identify those elements on which the components depend. The result of the scan is a list of dependencies for the components found in the package to be deployed. The exemplary interface further operates to aggregate and merge all of the components and their dependencies of a package for deployment. Once deployed, the interface is executed in the newly deployed environment to expand the package and place the components and their dependencies in the new environment. Using the dependencies determined as part of package assembly and deployment, the interface ensures that the components are properly situated and are operating properly.

## Description

### FIELD OF THE INVENTION

The invention generally relates to deployment of computing application components and, more particularly, to the deployment of packages using dependencies such that related components of the package are deployed concurrently to ensure proper operation.

### BACKGROUND OF THE INVENTION

As computing and communications technologies have advanced, there has been and continues to be a globalization of market places and the expansion of business and governmental enterprises alike. The geographic limitations of sharing data and information across large spans are becoming a distant memory. Moreover, with these technological advances, computing applications which were once slated for use on stand alone machines are being deployed across, what are often, large computing environment networks and platforms. As more data and computing applications become shared, there arises a need to manage and control the deployment of this data and applications to ensure integrity and reusability.

Many organizations need to centralize data to improve corporate decision-making. However, their data may be stored in a variety of formats and in different locations. Data Transformation Services (DTS) addresses this vital business need by providing a set of tools that allows the extraction, transformation, and consolidation of data from disparate sources into single or multiple destinations supported by DTS connectivity. By using DTS tools to graphically build DTS packages or by programming a package with the DTS object model, custom data movement solutions tailored to the specialized business needs an organization can be created.

A DTS package is an organized collection of connections, DTS tasks, DTS transformations, and workflow constraints assembled either with a DTS tool or programmatically to various cooperating computing applications or to structured storage files. Generally, each package contains one or more steps that are executed sequentially or in parallel when the package is run. When executed, the package connects to the correct data sources, copies data and database objects, transforms data, and notifies other users or processes of events. Packages can be edited, password protected, scheduled for execution, and retrieved by version.

Across enterprises it is not surprising that packages are constantly being moved. When the package is moved, in most instances, an upgrade to a system or a move to a system from a development machine to the test machine is needed. In the past such process was difficult to accomplish successfully without a lot of trial and error. Specifically, DTS is a pluggable component architecture and third parties may create components rendering it difficult to immediately ascertain which components belong to which package. Moreover, current implementations of the DTS setup only install default components and as such it is rendered difficult to ascertain and deploy all of the items which the package depends.

Currently, the person wishing to deploy a package is left to manually aggregate all of the dependencies for all of the components of a given package. Such process is both time and labor intensive as the person deploying the package must identify all of the components for a particular package and then identify all of the files, tables, other tasks, and/or other packages on which any particular components depends. Such information is crucial to the successful deployment of the package since if there are any missing elements (i.e. any overlooked dependencies), the deployed package will not properly operate in the newly deployed environment. Once collected and aggregated, the person assembling and deploying the package must merge all of the components (e.g. tasks, files, tables, and other dependencies) into the package for deployment. Once deployed, the same process, but in reverse, must be performed in the newly deployed environment to ensure that package will properly operate. Simply, existing practices are inefficient and leave significant room where errors may be introduced and propagated.

From the foregoing, it is appreciated that there exists a need for systems and method that overcome the prior art.

### SUMMARY OF THE INVENTION

The deployment of packages and their dependents is provided. In an illustrative implementation, an interface operates to expose the components of a package and to determine the dependencies of the components. In operation, a scan is performed on the package components to identify those elements on which the components depend. The result of the scan is a list of dependencies for the components found in the package to be deployed. The exemplary interface further operates to aggregate and merge all of the components and their dependencies of a package for deployment. Once deployed, the interface is executed in the newly deployed environment to expand the package and place the components and their dependencies in the new environment. Using the dependencies determined as part of package assembly and deployment, the interface ensures that the components and components are properly situated and are operating properly.

Other aspects of the invention are described below.

### BRIEF DESCRIPTION OF THE DRAWINGS

The system and methods for dependency based package deployment are further described with reference to the accompanying drawings in which:

Figures 1 and 2 are schematic illustrations of exemplary computing environments suitable for the present invention, with Figure 2 depicting an exemplary networked computing environment;

Figure 3 is a block diagram of exemplary computing environments employing dependency based package deployment in accordance with the herein described systems and methods;

Figure 4 is a block diagram of an exemplary data flow when performing dependency based package deployment;

Figure 5 is a flow diagram of exemplary processing performed to prepare a package for deployment; and

Figure 6 is a flow diagram of exemplary processing performed to expand a package once deployed.

### DETAILED DESCRIPTION OF ILLUSTRATIVE IMPLEMENTATIONS

### Overview:

Often, with data transformation, dependent packages are difficult to deploy, particularly from one machine to another, mainly because items upon which the package depends may or may not have been moved with the package. The herein described systems and methods provide for the deployment of dependent packages. In operation, package components may employ an interface that enumerates all the files the component requires to run successfully. A merge module is also provided which is used to merge the components and their dependencies during deployment. During deployment, the package looks in the merge module cache for the associated merge module. Using this information, a setup bundle is built that includes the merge module with components upon which the package depends into a deployment bundle, or setup file. In practice, the setup is communicated to the deployed environment so that the package may be installed in the deployed environment.

It is appreciated that although the herein described systems and methods are described in the context of the deployment of dependent packages, that deployment techniques may be utilized in various ways that go beyond the scope of the provided examples.

### A. Exemplary Computing Environment

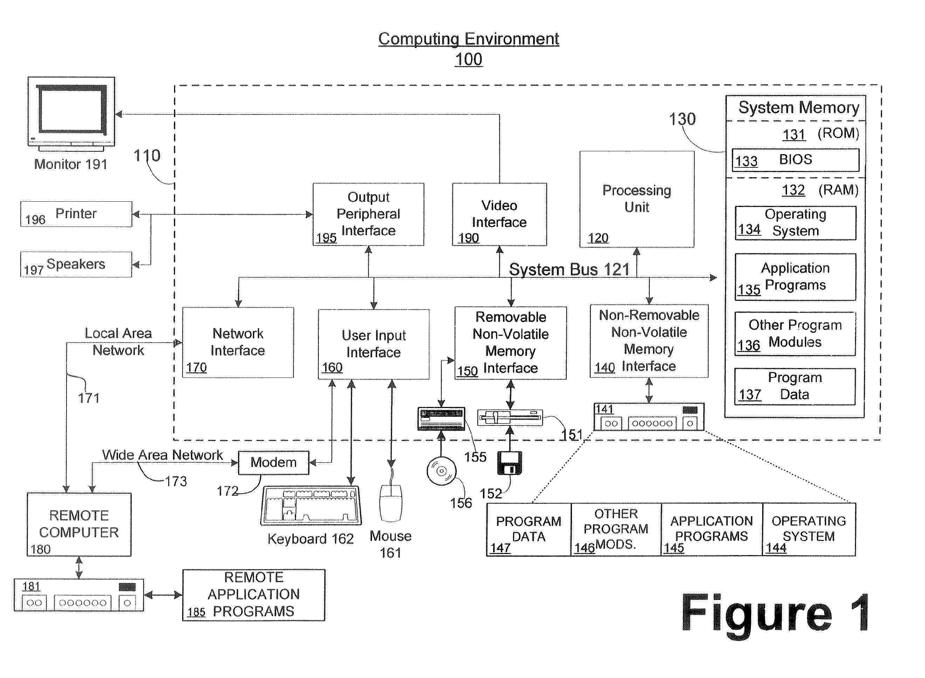

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or non-volatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/non-volatile computer storage media. By way of example only, Figure 1 illustrates a hard disk drive 140 that reads from or writes to non-removable, non-volatile magnetic media, a magnetic disk drive 151 that reads from or writes to a removable, non-volatile magnetic disk 152, and an optical disk drive 155 that reads from or writes to a removable, non-volatile optical disk 156, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### B. Exemplary Networked Computing Environment

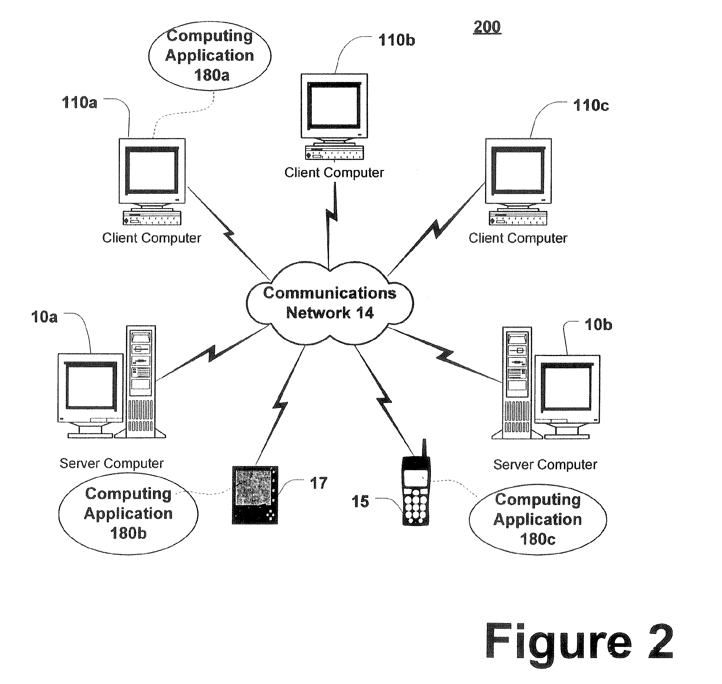

Computer environment 100, described above, can be deployed as part of a computer network. In general, the above description for computers applies to both server computers and client computers deployed in a network environment. Figure 2 illustrates an exemplary network environment, with a server in communication with client computers via a network, in which the present invention may be employed. As shown in Figure 2, a number of servers 10a, 10b, etc., are interconnected via a communications network 14 (which may be a LAN, WAN, intranet, the Internet, or other computer network) with a number of client computers 20a, 20b, 20c, or computing devices, such as, mobile phone 15, land-line telephone 16, and personal digital assistant 17. In a network environment in which the communications network 160 is the Internet, for example, the servers 10 can be Web servers with which the clients 20 communicate via any of a number of known protocols, such as, hypertext transfer protocol (HTTP) or wireless application protocol (WAP). Each client computer 20 can be equipped with browser 180a to gain access to the servers 10. Similarly, personal digital assistant 17 can be equipped with browser 180b and mobile phone 15 can be equipped with browser 180c to display and receive various data.

In operation, a user (not shown) may interact with a computing application running on a client computing devices performing dependency based package deployment. The reports may be stored on server computers and communicated to cooperating users through client computing devices over communications network 14.

Thus, the present invention can be utilized in a computer network environment having client computing devices for accessing and interacting with the network and a server computer for interacting with client computers. However, the systems and methods described herein can be implemented with a variety of network-based architectures, and thus should not be limited to the example shown. The herein described systems and methods will now be described in more detail with reference to a presently illustrative implementation.

### C. Package Deployments - Dependency Based - Merge Modules

Dependency based package deployment provides for the description of which files a component depends on so that those files may be moved along with the package. In practice, components may implement an interface that enumerates all the files the component requires to run successfully. In practice, a merge module is used to merge the dependent files and components in a package for deployment. Specifically a merge module allows for the creation of reusable setup components. Merge modules allow for the sharing of setup code between cooperating installers.

In a particular implementation, a merge module (.msm file) is a single package that contains files, resources, registry entries, and setup logic to install a component. In operation, merge modules generally cannot be installed alone, but instead are used within the context of an installer (.msi) file. Merge modules allow for the capturing of all of the dependencies for a particular component, insuring that the correct versions are installed. The merge module is powerful because, once a merge module is distributed it is not modified; instead new merge modules are created for each successive version of the component.

In comparison, installers are used to install applications and files on another computer; merge modules are used to install components that are shared by multiple applications. Generally, the main distinction between the two types is the target audience. Anything that will be used directly by the end user of the application (executable files, documents, HTML pages) should be packaged in an installer. Anything that can only be used by a developer (DLLs, controls, resources) are packaged in a merge module, which can then be packaged by the developer in an installer for distribution to the end user. Moreover, a component that is shared by more than one application (or that has the potential for being shared) is placed in its own merge module.

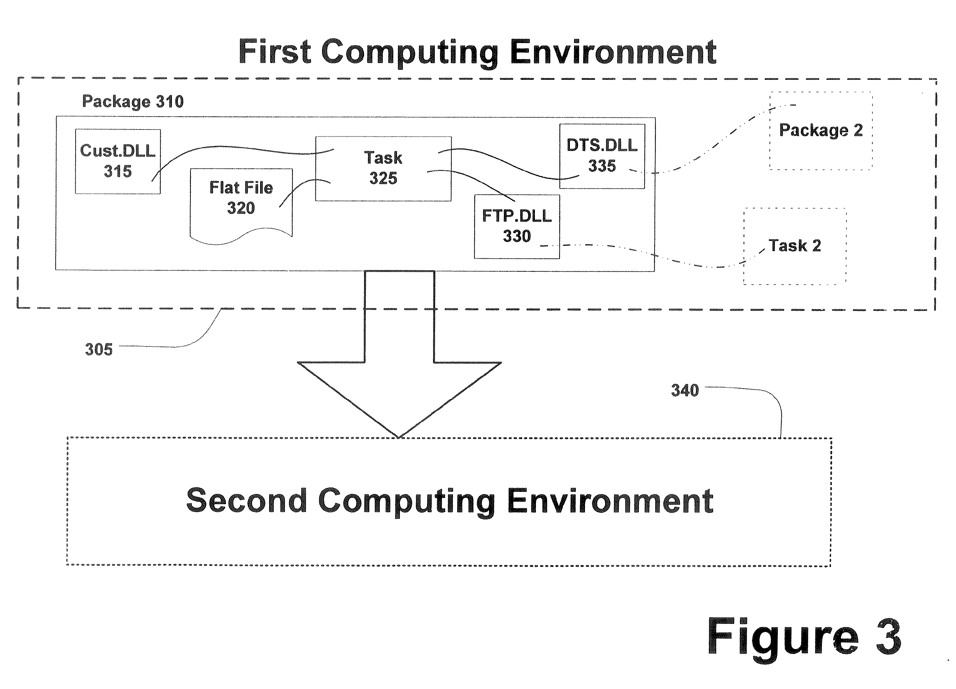

Figure 3 is a block diagram of an exemplary concept of package deployment. As is shown, first computing environment comprises an illustrative and exemplary package 310. Within the package 310 there exists a task 325, custom file 315, flat file 320, ftp file 330, and DTS file 335. As indicated by the dotted line, the package and its components are aggregated and then communicated to a second computing environment as indicated by the arrow. In the contemplated invention, the package maintains a list of the dependencies between the task and its components. This information is communicated as part of deployment (as indicated by the arrow) such that the package may be successfully executed and operated in the second computing environment.

In the example provided task 325 may comprise an accounting task for use to calculate, track, manage, store, and communicate a company's sales. Accordingly, task 325 may be required to use historical sales information which may be found in flat file 320. In addition, task 325 may cooperate with other packages such as a data storage package using DTS.DLL 335.

Furthermore, task 325 may be required to calculate sales and convert the sales for varying international currencies. In this context, task 325 may call upon a customized file, such as Cust.DLL 315 to perform such operations. Lastly, task 325 may be required to communicate the sales information to a second computing environment using the file transfer protocol (ftp) (or other communications protocol). In this context, task 325 calls upon FTP.DLL 330 for ftp type communications.

As is seen task 325 to perform its many functions is dependent on other files, tables, and components. Also as is seen (as represented by the dotted line boxes), the files, tables, and components for package 310 are not created for the exclusive use by task 325, but rather may be used by other components, packages, tasks, in the first computing environment. With sharing occurring, the proper identification of dependencies becomes desirable to mitigate confusion and to reduce error in package creation.

It is appreciated that although the exemplary package is described to contain particular components having particular dependencies that such description is merely illustrative and the inventive concepts described herein may be applied to create various packages having various configurations, components, and component dependencies.

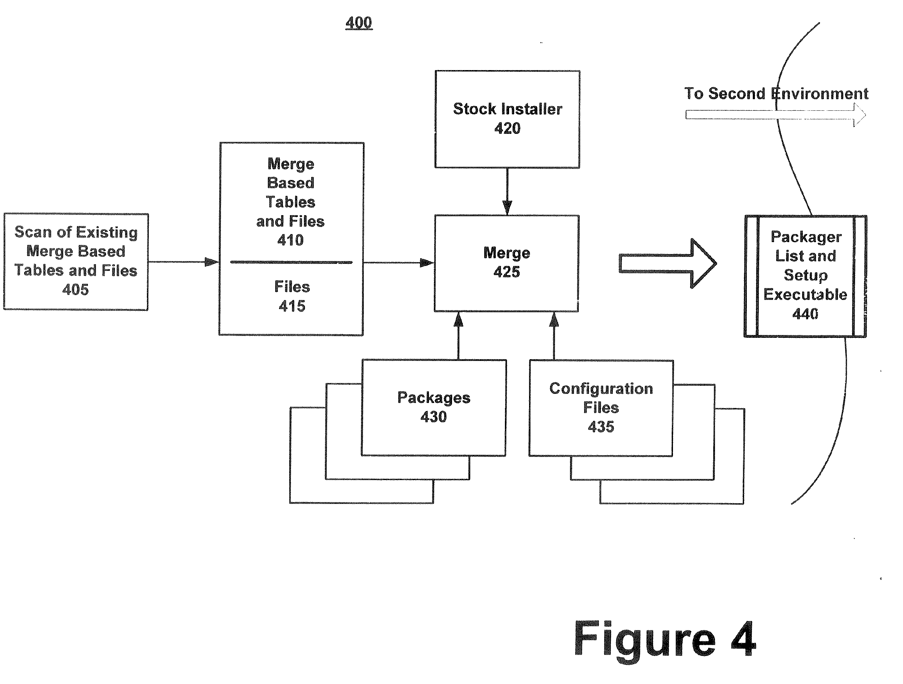

Figure 4 shows a block diagram of dependency package deployment system 400. As is shown, dependency package deployment system 400 comprises merge module 435. Merge module cooperates with stock installer 420, packages 430, configuration files 435, Merge based tables and files 410, and files 415. Merge based tables and files 410 and files 415 result from a scan of existing merge based tables and files performed at block 405. Merge module 425 cooperates with stock installer 420, packages 430, configuration files 435, Merge based tables and files 410, and files 415 to generate dependent populated package and setup executable 440, which, as is indicated by the arrow, is deployable to a second environment.

In operation, the existing merge based tables and files are scanned to determine if the components of packages 430 have any dependencies which should be added to packages 430. The scan results in merge based table and files 410 and other dependency files 415. The list of the merge based table and files and other dependency files acts as one input to Merge module 425. Merge module 425 acts to aggregate all of the package components and their dependent files and tables and merge them with stock installer 420 and some configuration files 430 to generate a setup executable file 440. Setup executable file 440, when executed in a second environment will provide packages 330 with all of their dependent files and components.

In a contemplated implementation, dependency package deployment system 400 employs MICROSOFT ® Visual Studio's merge module dependency architecture (e.g. merge modules and associated files) in creating setup file and packager list 440. Specifically, in this context, packages 330 comprise default DTS components. A scan of existing MSM tables and files is performed at block 405 to determine the file and table dependencies for non-default (e.g. third party created) components of packages 330. It is appreciated that such process is a result of a process in which the package task exposes its dependencies and in which the task is able to communicate to an interface to expose such dependencies. In the context of Visual Studio, the interface is the package deployment wizard which is used to assemble and deploy packages. The identified MSMs 410 and other files 415 are merged by Visual Studio's standard merge module with a stock MSI installer, package definitions (e.g. default package components) and configuration files 435 to create a MSI list and setup executable 440.

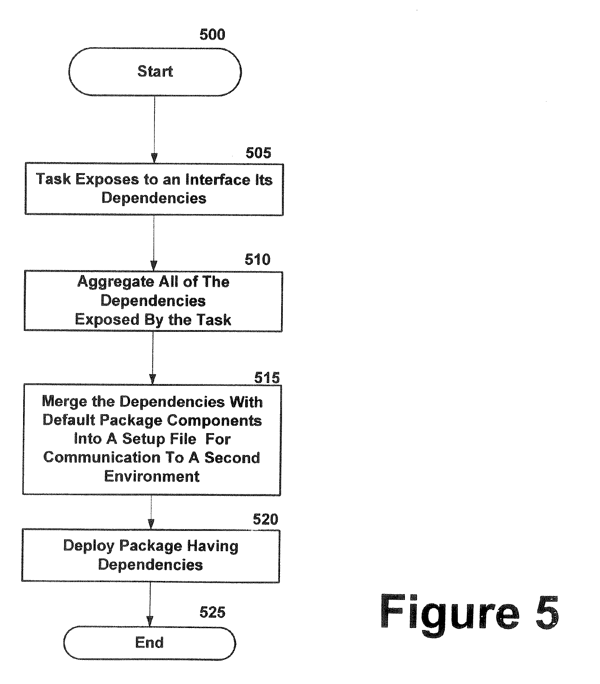

Figure 5 shows the processing performed when creating and deploying a package and its dependencies. As is shown, processing begins at block 500 and proceeds to block 505 where a package task exposes to a cooperating interface its dependencies. From there processing proceeds to block 510 where the exposed dependencies are aggregated. The dependencies are then merged with default package components for deployment at block 515. The package is then deployed at block 520 and processing then terminates at block 525.

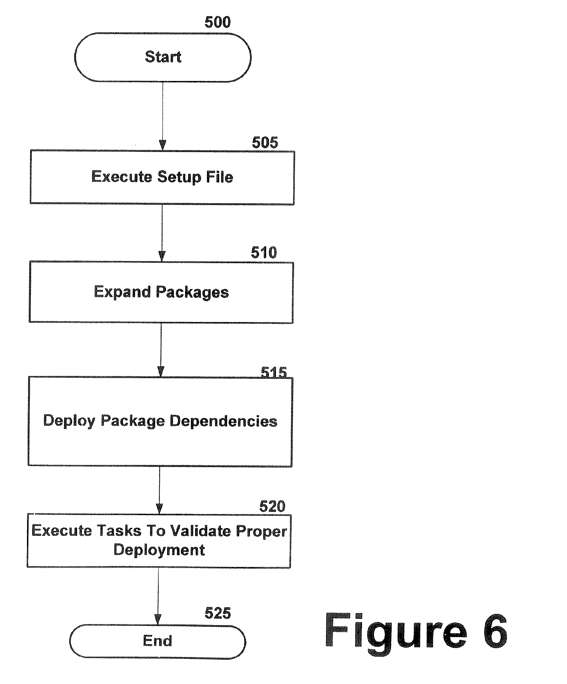

Figure 6 shows the processing performed when the package is deployed in the deployed environment. As is shown, processing begins at block 500 and proceeds to block 505 where the communicated set up file (containing the deployed package and its dependencies) is executed. The packages found in the setup file are then expanded at block 510. Package dependencies are then deployed at block 515 and the package tasks are executed to validate proper deployment at block 520. From there processing terminates at block 525.

### D. Conclusion

In sum, the herein described systems and methods provide dependency based package deployment. It is understood, however, that the invention is susceptible to various modifications and alternative constructions. There is no intention to limit the invention to the specific constructions described herein. On the contrary, the invention is intended to cover all modifications, alternative constructions, and equivalents falling within the scope and spirit of the invention.

It should also be noted that the present invention may be implemented in a variety of computer environments (including both non-wireless and wireless computer environments), partial computing environments, and real world environments. The various techniques described herein may be implemented in hardware or software, or a combination of both. Preferably, the techniques are implemented in computer programs executing on programmable computers that each include a processor, a storage medium readable by the processor (including volatile and non-volatile memory and/or storage elements), at least one input device, and at least one output device. Program code is applied to data entered using the input device to perform the functions described above and to generate output information. The output information is applied to one or more output devices. Each program is preferably implemented in a high level procedural or object oriented programming language to communicate with a computer system. However, the programs can be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The system may also be considered to be implemented as a computer-readable storage medium, configured with a computer program, where the storage so configured causes a computer to operate in a specific and predefined manner.

Although an exemplary implementation of the invention has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention. The invention may be better defined by the following exemplary claims.

## Claims

1. A method for deployment of components, comprising:
defining dependencies by components, wherein the components expose their dependencies to a cooperating interface;
generating a list of defined dependencies;
identifying files associated with the defined dependencies; and
processing the dependency list and identified files to generate a deployable bundle.

2. The method as recited in claim 1, further comprising communicating the deployable bundle to a cooperating environment.

3. The method as recited in claim 1, further comprising merging the dependency list, the identified files, and default component elements to generate the deployable bundle.

4. The method as recited in claim 1, further comprising scanning the components to identify default elements and non-default elements.

5. The method as recited in claim 1, further comprising providing an installer component for inclusion in the deployable bundle.

6. The method as recited in claim 5, further comprising validating the deployable bundle by installing the deployable bundle in a computing environment.

7. The method as recited in claim 1, further comprising providing configuration files for inclusion in the deployable bundle.

8. The method as recited in claim 1, wherein the processing step further comprises merging the dependency list, the identified files, and default component elements to generate the deployable bundle.

9. The method as recited in claim 8, further comprising providing a merge module for performing the merge of the dependency list, the identified files, and default component elements to generate the deployable bundle.

10. A computer readable medium having computer readable instructions for:
defining dependencies by components, wherein the components expose their dependencies to a cooperating interface;
generating a list of defined dependencies;
identifying files associated with the defined dependencies; and
processing the dependency list and identified files to generate a deployable bundle.

11. A data structure for use in the creation of packages for deployment comprising:
a data field containing data representing components of packages;
a data field containing dependencies data derived from the field containing the data representative of the components of the packages by scanning the first field to identify items on which the package components depend; and
a field to function to delimit the end of the data structure.

12. The data structure recited in claim 11, further comprising a field derived from the data field containing dependencies by merging the component dependencies with data representing the package components.

13. The data structure recited in claim 12, wherein the field containing the merged data comprises data representative of configuration information about how to deploy the package.

14. The structure recited in claim 11, further comprising a field to instruct an installation program to install the package.

15. A system to deploy a package having dependencies comprising:
dependency data representative of the dependencies of components of the package; and
a merge module operating to merge the dependency data with the components of the package to generate a deployable bundle.

16. The system as recited in claim 15, further comprising an installer, the installer being merged by the merge module to generate the deployable bundle.

17. The system as recited in claim 16, further comprising configuration information, the configuration information being merged by the merge module to generate the deployable bundle.

18. The system as recited in claim 17, further comprising default package components, the default package components being merged by the merge module to generate the deployable bundle.

19. The system as recited in claim 18, further comprising a communication means for use in communicating the deployable bundle to a cooperating computing environment.

20. The system as recited in claim 19, further comprising a validation means to validate the proper deployment of the package.

21. A system for use in the deployment of components having dependencies comprising:
a means for determining the dependencies of components, the components exposing the dependencies to the means;
a means for merging the dependencies of the components with the components to generate a deployable bundle.

22. The system as recited in claim 21, further comprising an installation means, the installation means cooperating with the merging means for installing the deployable bundle.
